# EUROPEAN PATENT APPLICATION

(11) **EP 4 124 117 A1**
(43) Date of publication of application: **25.01.2023**
(21) Application number: 21884973.5
(22) Date of filing: 18.10.2021
(51) Int. Cl.: H04W 36/18

(54) **SERVICE TRANSMISSION METHOD, COMMUNICATION DEVICE AND STORAGE MEDIUM**

(30) Priority: 02.11.2020 CN 202011205630
(71) Applicant: ZTE Corporation, Shenzhen, Guangdong 518057 (CN)
(72) Inventor: ZHANG, Zhen, Shenzhen, Guangdong 518057 (CN); CHE, Zhonghui, Shenzhen, Guangdong 518057 (CN); YU, Hongquan, Shenzhen, Guangdong 518057 (CN); MA, Xiaoliang, Shenzhen, Guangdong 518057 (CN)
(74) Representative: Petraz, Gilberto Luigi
(86) International application number: PCT/CN2021/124502
(87) International publication number: WO 2022/089245

(57) **Abstract**

Provided in the present disclosure are a service transmission method, a communication device and a storage medium. A terminal establishes at least two mutually associated TCP links with a server to form a TCP link group. Then, during a process of implementing data transmission of a target service with the server by using a first TCP link in the TCP link group, the terminal and the server may also directly hand over the target service to a second TCP link in the TCP link group and continue to perform the target service.

## Description

The present application claims the priority of the Chinese patent application No. CN202011205630.4 filed on November 2, 2020 and entitled "service transmission method, communication device and storage medium", the entirety of which is incorporated herein by reference.

### Field

The present disclosure relates to, but is not limited to, the field of communication, and in particularly relates to, but is not limited to, a service transmission method, a communication device and a storage medium.

### Background

High reliability, high performance, low delay and large capacity together constitute outstanding features of 5G networks, and are also the requirements of terminals on the 5G networks. The so-called high reliability refers to the ability to continuously provide service for the terminals. For example, terminals in a local area network are usually connected to the Internet by means of a router to communicate with servers in the Internet for implementing services. Thus, reliable communication links are always ensured between the terminals in the local area network and the servers, which greatly ensures the reliability of the networks and the continuity of the services.

However, the communication links between the terminals and the servers involve the connection between multiple communication devices. Once a link between two of the communication devices fails, it takes time to re-establish a link. However, the communication link between a terminal and a server is disconnected during re-establishment of the link, and service transmission cannot be carried out between the terminal and the serve. As a result, the communication quality of a network is seriously affected, and the user experience at a terminal side is degraded. Therefore, how to enhance the reliability of the communication link between the terminal and the server is an urgent problem to be solved.

### Summary

A service transmission method, a communication device and a storage medium provided in the present disclosure improve reliability of communication links between a terminal and a server.

An embodiment of the present disclosure provides a service transmission method, including: establishing at least two mutually associated transmission control protocol (TCP) links with a server to form a TCP link group; implementing data transmission of a target service with the server by using a first TCP link in the TCP link group; and handing over the target service to a second TCP link in the TCP link group and continuing to perform the target service.

An embodiment of the present disclosure further provides a service transmission method, including: establishing at least two mutually associated TCP links with a terminal to form a TCP link group; implementing data transmission of a target service with the terminal by using a first TCP link in the TCP link group; and handing over the target service to a second TCP link in the TCP link group and continuing to perform the target service.

An embodiment of the present disclosure further provides a communication device including a processor, a memory and a communication bus. The communication bus is configured to implement connection communication between the processor and the memory. The processor is configured to execute a first service transmission program stored in the memory to implement steps of the above first service transmission method. Alternatively, the processor is configured to execute a second service transmission program stored in the memory to implement steps of the above second service transmission method.

An embodiment of the present disclosure further provides a storage medium. The storage medium stores at least one of first service transmission program and second service transmission program, the first service transmission program is executable by one or more processors to implement steps of the above first service transmission method; and the second service transmission program is executable by one or more processors to implement steps of the above second service transmission method.

Other features and corresponding beneficial effects of the present disclosure will be illustrated in the later part of the specification, and it should be understood that at least part of the beneficial effects become apparent from the recitation in the specification of the present disclosure.

### Brief Description of the Drawings

Fig. 1 is a schematic diagram illustrating connection among a local area network terminal, a router and a server in the prior art shown in a first embodiment of the present disclosure;
Fig. 2 is a flow chart of a service transmission method provided in a first embodiment of the present disclosure;
Fig. 3 is a schematic diagram of TCP links on a terminal provided in a first embodiment of the present disclosure;
Fig. 4 is a flow chart of formation of a TCP link group between a terminal and a server provided in a first embodiment of the present disclosure;
Fig. 5 is a flow chart of establishment of a first TCP link between a terminal and a server provided in a first embodiment of the present disclosure;
Fig. 6 is a schematic diagram of a structure of a packet in an acknowledge message provided in a first embodiment of the present disclosure;
Fig. 7 is a flow chart of formation of a TCP link group between a router and a server provided in a second embodiment of the present disclosure;
Fig. 8 is a flow chart of sending data from a router to a server based on at least two TCP links provided in a second embodiment of the present disclosure;
Fig. 9 is a schematic diagram of a hardware structure of a communication device provided in a third embodiment of the present disclosure; and
Fig. 10 is a schematic diagram of a service transmission system provided in a third embodiment of the present disclosure.

### Detailed Description of the Embodiments

In order to make the objectives, technical solutions and advantages of the present disclosure clearer, embodiments of the present disclosure will be further described in detail below by means of specific implementations and in conjunction with accompanying drawings. It should be understood that the specific embodiments described herein are intended only to interpret the present disclosure rather than to limit the disclosure.

### A first embodiment

At present, the 5G era is accelerating, and major economies around the world are accelerating the commercial implementation of 5G. Driven by policy support, technological progress and market demand, China's 5G industry is developing rapidly and good achievements have been achieved in various fields. 5G technology incorporates multiple technologies, such as artificial intelligence, big data and the like, and has become an important participant in promoting the revolution of traditional industries, such as transportation, medical care and traditional manufacturing and the like, to intelligent, wireless and the like. The 5G technology has broad development prospect, for example, in applications of cloud virtual reality (VR), augmented reality (AR), Internet of Vehicles, wireless medical care, networked unmanned aerial vehicles, smart cities, intelligent manufacturing, personal artificial intelligence (AI) assistance, etc., which leads to usage of a huge number of Internet of Things, Mobile Broad Band (MBB) terminal devices in various industries, even in barren deserts, dense forests and other places that are not easy or accessible to humans.

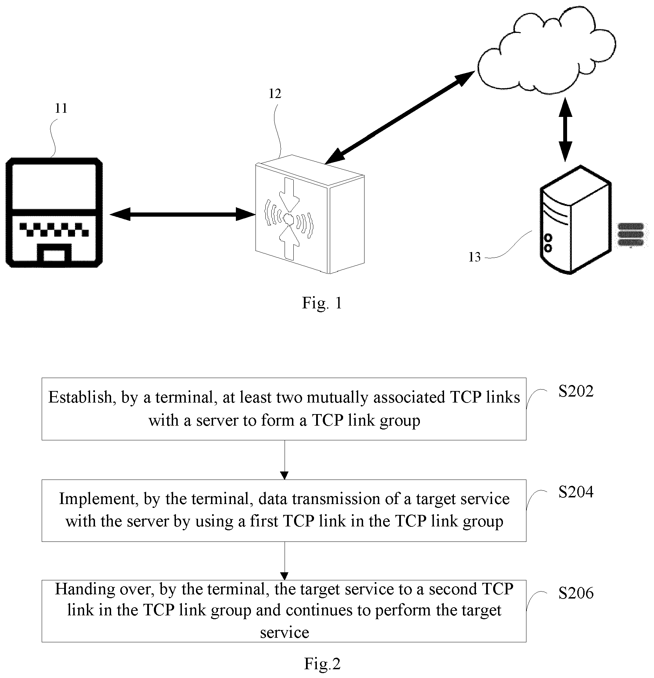

The increasing maturity of 5G technology has opened a new era of Internet of Everything. In the related art, a local area network device (e.g., mobile phones and computers) in a local area network is usually connected to the Internet by means of devices such as a router. For example, in Fig. 1, a local area network device 11 on a local area network side is connected to a router 12, the router 12 is connected to the Internet to establish communication links with a server 13 in the Internet, so as to implement service transmission. Usually, the router 12 may establish a TCP link with the server 13 by means of one of wide area network (WAN) interfaces of the router 12, and then service data may be transmitted in the TCP link. The router 12 receives data from the server 13, then carries out network address translation (NAT) processing on the received data to determine a receiving terminal of the data, and transmits the data to a corresponding local area network device 11 in the local area network. On the other hand, the router 12 also receives data sent from the local area network device 11 in the local area network, converts a source IP address of the data from a private network IP address into a public network IP address, and then sends the converted source IP address of the data to the server 13.

It should be understood that when the TCP link between the router 12 and the server 13 cannot work normally due to a poor network signal, a network failure, a router failure, etc., the local area network device 11 following the router 12 will be disconnected and cannot work normally, which brings about a critical defect to the 5G applications that require high reliability. In order to solve this problem, provided in the present embodiment is a service transmission method. Please refer to a flow chart of the service transmission method shown in Fig. 2.

At S202, a terminal establishes at least two mutually associated TCP links with a server to form a TCP link group.

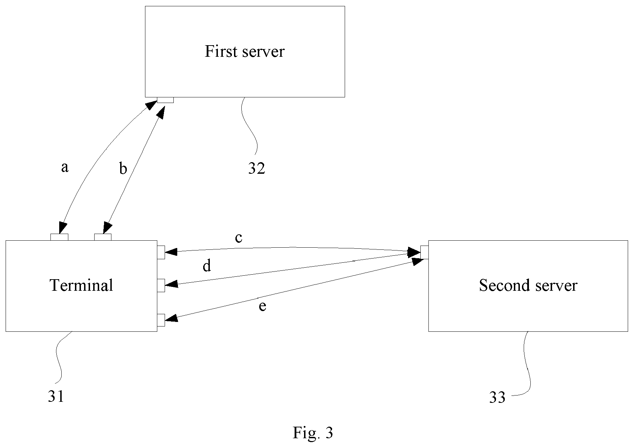

In the embodiment, the terminal includes, but is not limited to, the router. For example, in addition to the router, the terminal may alternatively be a customer premise equipment (CPE), such as an access point (AP) equipment. The terminal includes at least two WAN interfaces. Each of the WAN interfaces has a corresponding public network IP address, and the terminal may configure a corresponding policy routing table for each of the WAN interfaces. Taking the router as the terminal as an example, in the related art, even though there are multiple WAN interfaces on the router, the router will only use one of the WAN interfaces to establish the TCP link with the server. Even though a backup link needs to be set for this TCP link for disaster recovery, the router will only select one of the remaining WAN interfaces to establish an interface for the backup link. Therefore, in the related art, even though there are two or even more WAN interfaces on the terminal device, there is always only one TCP link between the terminal device and a same server. However, in the embodiment, at least two TCP links may be established between the terminal and the server, and these TCP links are associated with each other to guarantee a same service. In the embodiment, the whole of two or even more mutually associated TCP links between the terminal and the server is referred to as a TCP link group. It should be understood that one terminal device may have only one TCP link group, or two or even more TCP link groups. For example, in Fig. 3, two TCP links, TCP link a and TCP link b, are established between a terminal 31 and a first server 32, and these two TCP links constitute a first TCP link group. At the same time, TCP link c, TCP link d and TCP link e are established between the terminal 31 and a second server 33, and these three TCP links constitute a second TCP link group.

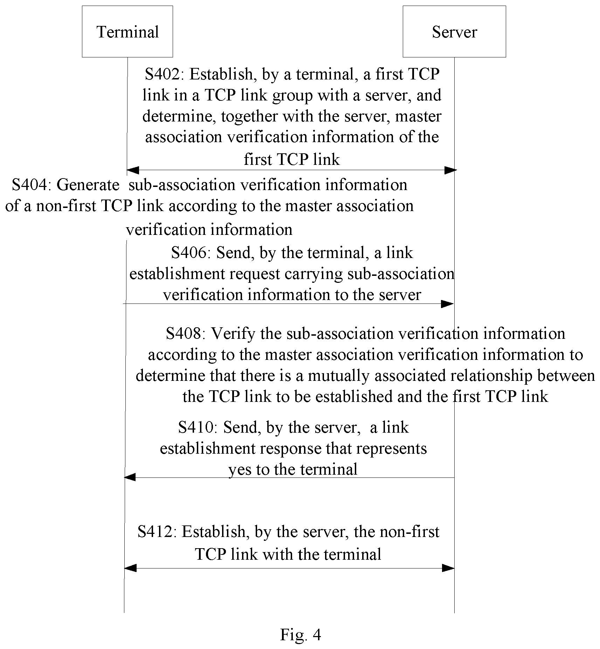

The process of establishing a TCP link group between a terminal and a server is set forth below in conjunction with a flow chart shown in Fig. 4. In Fig, 4, the process of establishing two TCP links between the terminal and the server is mainly described.

At S402, a terminal establishes a first TCP link in a TCP link group with a server, and determines, together with the server, master association verification information of the first TCP link.

A first one of TCP links established between one terminal and one server first is, a first one TCP link in a TCP link group, i.e., the first TCP link of the TCP link group. It should be understood that, provided the terminal and the server have available WAN interfaces, a TCP link may be usually established between the two without additional specific function supported by the terminal and the server. Therefore, when the first one TCP link, i.e., the first TCP link in the TCP link group, is established between the terminal and the server, the first one of TCP links may be directly established therebetween. However, considering that other non-first TCP links may also be established in the subsequent process and the association relationship between these non-first TCP links and the first TCP link needs to be established, master association verification information of the first TCP link should also be determined by the terminal and the server during the process of establishing the first TCP link between the two. In this way, in the subsequent process, if the terminal requests to establish a non-first TCP link that is mutually associated with the first TCP link, the server may determine that the TCP link requested to be established by the terminal is an associated link of a previously established first TCP link according to a link establishment request from the terminal in combination with the master association verification information.

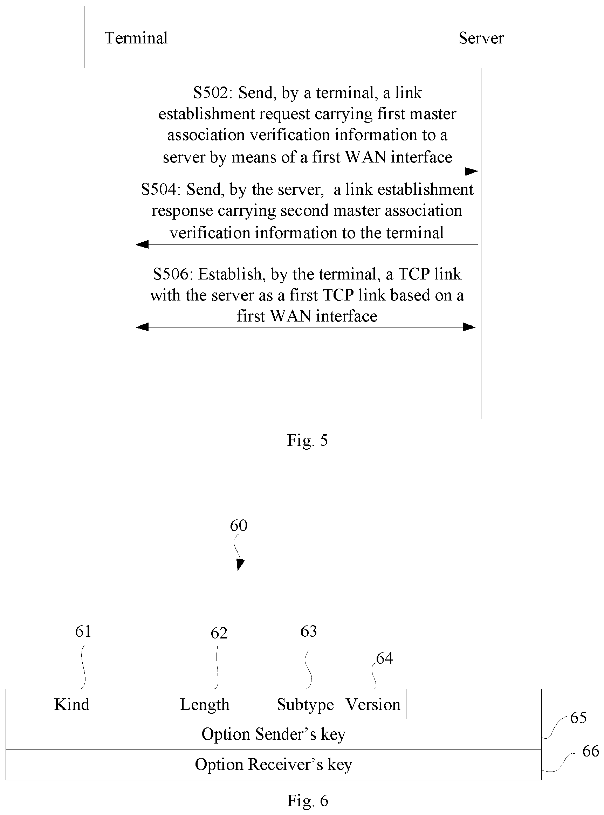

The process of establishing the first TCP link is explained below in conjunction with a flow chart shown in Fig.5.

At S502, a terminal sends a link establishment request carrying first master association verification information to a server by means of a first WAN interface.

In the embodiment, the first master association verification information is association verification information determined by a terminal side for a current first TCP link to be established. The first master association verification information has a function of uniquely identifying TCP links between the terminal and the server, and may also uniquely identify a TCP link group to which the first TCP link belongs. The terminal makes the first master association verification information carried in the link establishment request and send the first master association verification information to the server by means of one of its available WAN interfaces. The available WAN interfaces are those that have a normal current state and are not occupied, and the WAN interface used to initiate the link establishment request for the first TCP link is herein referred to as a first WAN interface. It should be understood that if the server agrees to establish the requested first TCP link with the terminal, the first TCP link will be established based on the first WAN interface. Optionally, the terminal may send the link establishment request to the server by means of a socket interface.

At S504, the server sends a link establishment response carrying second master association verification information to the terminal.

After receiving the link establishment request sent by the terminal, the server extracts the association verification information from the link establishment request. According to the extracted first master association verification information, the server may know that the terminal expects to establish a TCP link with it, and the TCP link is a first TCP link in a TCP link group. If the server agrees to establish the first TCP link, the server may send a link establishment response that represents yes to the terminal. In some examples, the server may make second master association verification information carried in the link establishment response, and use the second master association verification information to indicate to the terminal that it agrees to establish the first TCP link request by the terminal.

In some examples, the first master association verification information may be 64-bit key information randomly generated by the terminal, and the second master association verification information may be 64-bit key information randomly generated by the server. For example, the terminal and the server may establish the first TCP link therebetween according to a SYN-SYN_ACK- ACK interactive manner. After receiving the link establishment request (SYN) from the terminal, the server may acquire the first master association verification information; and when receiving the link establishment response (SYN_ACK) sent from the server, the terminal may acquire the second master association verification information determined by a server side for the first TCP link. Optionally, if the terminal and the server establish the first TCP link in the SYN-SYN_ACK- ACK interactive manner, after receiving the link establishment response and before establishing the first TCP link, the first master association verification information and the second master association verification information may also carried in the acknowledge message (ACK) together by the terminal, and then sent to the server by means of a first WAN interface, such that the server may confirm that the link establishment response sent from the server to the terminal has been received by the terminal as well as may determine whether the first master association verification information and the second master association verification information are correct. For example, Fig. 6 shows a schematic diagram of a structure of a packet of an acknowledge message. The acknowledge message 60 includes: a kind field 61, a length field 62, a subtype field 63, a version field 64, an option sender's key field 65 and an option receiver's key field 66, and the option sender's key field 65 carries the first master association verification information at the terminal side, and the option receiver's key field 66 carries the second master association verification information provided by the server.

It should be understood that in some examples, the server will not send the second master association verification information to the terminal, because there is only a need for the server to send the link establishment response that represents yes, to the terminal i.e., the link establishment response indicates that the server agrees to establish the TCP link, requested by the terminal, with the terminal. Moreover, even though both the terminal and the server need to provide association verification information for opposite terminals, the master association verification information may not be limited to be 64-bit. For example, in some examples, both the first master association verification information and the second master association verification information are 32-bit, and in some other examples, both the first master association verification information and the second master association verification information are 128-bit.

At S506, the terminal establishes a TCP link, as a first TCP link, with the server based on a first WAN interface.

After receiving the link establishment response that is sent from the server and represents yes, the terminal may establish the first TCP link with the server based on the WAN interface, i.e., the first WAN interface, via which the link establishment request is sent.

At S404, the terminal generates sub-association verification information of a non-first TCP link according to the master association verification information.

In the embodiment, the flow of establishing the non-first TCP link between the terminal and the server may be substantially the same as that of establishing the first TCP link between the two, except that the association verification information carried in the link establishment request sent from the terminal to the server when establishing the non-first TCP link is the sub-association verification information, which is generated by the terminal according to the master association verification information.

Optionally, if the second master association verification information is not carried in the link establishment response from the server, the association verification information corresponding to the first TCP link only include the first master association verification information. In this case, the first master association verification information may be directly used as the master association verification information of the first TCP link by the terminal and the server. In other cases, if the second master association verification information is carried in the link establishment response of the server, both the first master association verification information and the second master association verification information correspond to the first TCP link, and any one of the first master association verification information and the second master association verification information may be used as the master association verification information of the first TCP link by the terminal and the server. For example, the first master association verification information is still used as the master association verification information of the first TCP link by the terminal and the server. In still other examples, the terminal and the server may alternatively combine the first master association verification information with the second master association verification information to generate new information as the master association verification information of the first TCP link. For example, the terminal and the server combine the first master association verification information with the second master association verification information by using a same combination rule, and the combined information is used as the master association verification information of the first TCP link.

When there is a need to establish the non-first TCP link (i.e., a n-th link in the TCP link group, n being greater than or equal to 2) in the TCP link group with the server, the terminal may generate the sub-association verification information according to the master association verification information of the first TCP link. It should be understood that the terminal should generate the sub-association verification information according to the master association verification information in a manner agreed with the server, such that in a case that the master association verification information is known, the server may determine the relationship between the sub-association verification information and the master association verification information known to the server after receiving the sub-association verification information, and thus determine that the TCP link requested by the terminal is mutually associated with a certain previously established TCP link. For example, in some examples, the sub-association verification information, like the master association verification information, is also 64-bit. But the content of the first 32 bits of the sub-association verification information is the same as that of the last 32 bits of the master association verification information of the first TCP link. Thus, after receiving the link establishment request carrying the sub-association verification information, the server may determine, according to the content of the first 32 bits of this information, that this association verification information is sub-association verification information of certain previous master association verification information. In some other examples, information carried in even bits of the sub-association verification information is the same as the information carried in even bits of the master association verification information.

In some examples, in the process of establishing the first TCP link, the terminal sends the first master association verification information to the server, and the server also sends the second master association verification information to the terminal. But in the process of establishing the non-first TCP link, the terminal and the server use the first master association verification information as the master association verification information of the first TCP link, and thus the terminal may generate first sub-association verification information of the non-first TCP link to be established according to the first master association verification information.

At S406, the terminal sends a link establishment request carrying sub-association verification information to the server.

After generating the sub-association verification information, the sub-association verification information may be carried in the link establishment request by the terminal and sent to the server. For example, the first sub-association verification information may be carried in the link establishment request by the terminal and sent to the server.

At S408. the server verifies the sub-association verification information according to the master association verification information, to determine that there is a mutually associated relationship between the TCP link to be established and the first TCP link.

After receiving the link establishment request carrying the sub-association verification information, the server may extract the sub-association verification information from the link establishment request. It should be understood that if the format of the sub-association verification information sent from the terminal is the same as that of the master association verification information, when receiving a link establishment request, the server may not directly determine whether the link establishment request carries the master association verification information or the sub-association verification information, and needs to extract the association information in the link establishment request for verification. For example, if the server and the terminal agree in advance that the last 10 bits of data of the master association verification information are the first 10 bits of data of the sub-association verification information, after receiving a link establishment request, the server may extract the first 10 bits of data of the association verification information in the link establishment request, and then judges whether the extracted data is the same as the last 10 bits of data of certain previously determined master association verification information. If yes, for example, this association verification information is the same as the last 10 bits of data of master association verification information A, the association verification information carried in the currently received link establishment request is the sub-association verification information, and the link establishment request is used to request the establishment of the non-first TCP link associated with the first TCP link of the master association verification information A. Of course, if the server determines that no master association verification information has the last 10 bits of data thereof the same as the first 10 bits of data of the association verification information in the link establishment request, the association verification information carried in the link establishment request is first association verification information, and the TCP link requested by the link establishment request is the first TCP link.

At S410, the server sends a link establishment response that represents yes to the terminal.

If the server has available WAN interfaces and agrees to establish the non-first TCP link of the TCP link group with the terminal, the server may return the link establishment response that represents agreement to the terminal. In some examples, the second master association verification information may be carried in the link establishment response by the server to indicate to the terminal that it agrees to establish the non-first TCP link request by the terminal. In some examples, the second sub-association verification information may be generated according to the second master association verification information. Optionally, the server may generate the second sub-association verification information according to the second master association verification information in the same manner as the terminal generates the first sub-association verification information according to the first master association verification information.

At S412, the server establishes the non-first TCP link with the terminal.

After receiving the link establishment response that is sent from the server and represents yes, the terminal may establish the non-first TCP link with the server. In some examples, a link establishment request from the terminal requesting the establishment of the non-first TCP link is sent by means of its second WAN interface. Naturally, the terminal may also receive the link establishment response from the server for the non-first TCP link by means of the second WAN interface. If this link establishment response indicates agreement to establish the non-first TCP link, the terminal will establish the non-first TCP link with the server based on its first WAN interface.

The flows of establishing the first TCP link as well as one non-first TCP link in one TCP link group are introduced above. It should be understood by those skilled in the art that there is only one first TCP link in one TCP link group; but there may be any number of non-first TCP links, and thus two or even more non-first TCP links may be established between the terminal and the server based on the foregoing flow of establishing the non-first TCP link.

At S204, the terminal implements data transmission of a target service with the server by using a first TCP link in the TCP link group.

After establishing at least two mutually associated TCP links, the terminal and the server may carry out the target service by using one of the at least two TCP links, so as to implement data transmission of the target service. It should be understood that since all of the links in the TCP link group are available, data may be received by a data receiving terminal regardless of which TCP link is used for data transmission by a data sending terminal, and thus it is mainly up to the data sending terminal to decide which TCP link is used for interaction with the opposite terminal. The data sending terminal may hand over the target service to be transmitted from a TCP link to another TCP link at any time. Assuming in a case where one of the terminal and the server as the data sending terminal selects the first TCP link in the TCP link group to interact with the opposite terminal at a certain time point, the first TCP link is the service link between the two. At this time, other TCP links in the TCP link group may be on standby, and these standby links may be regarded as backup of the first TCP link.

In addition, it is worth noting that the number of the TCP links in the TCP link group may change dynamically, i.e., the TCP links between the server and the terminal may be established at any time and disconnected dynamically, and thus it is not required in the embodiment that all of the TCP links in the TCP link group should be established in advance before the service is carried out. That is, the server and the terminal may start the service upon the establishment of the first TCP link in the TCP link group between the two. The non-first TCP links in the TCP link group only need to be established before the server and the terminal need to hand over links. For example, after the first TCP link A1 in the TCP link group is established by between the terminal and the server, the terminal and the server may carry out the target service based on the first TCP link A1. In the process of carrying out the target service, other non-first TCP links, such as A2, A3, and A4, may be established between the terminal and the server. At a moment of t1, the TCP link A2 is disconnected, and only the TCP links A1, A3 and A4 are maintained to be connected in the TCP link group. At a moment of t2, the terminal hands over the target service from the TCP link A1 to the TCP link A4. At a moment of t3, since the terminal establishes a non-first TCP link A5 with the server, there are TCP links A1, A3, A4 and A5 included in the TCP link group at this time. In the above example, the TCP links in the TCP link group are different at different moments, and part of the links in the TCP link group may be established after starting the target service.

The data sending terminal may randomly select a service link from the TCP link group when determining the service link. In some examples, the data sending terminal may determine the service TCP link according to the size of a link identity value. For example, there are three TCP links in one TCP link group, the three TCP links have link identifiers respectively of "1", "2" and "3", and the data sending terminal may select the TCP link with the link identifier with a minimum value as the current service link. It should be understood that performance parameters of the TCP links in the TCP link group are different in, for example, transmission rate, bit error rate, delay, etc. The data sending terminal may directly select a service link according to the performance parameters of the TCP links when selecting the service link.

For example, the TCP link with the highest transmission rate is selected as the service link, the TCP link with the lowest bit error rate is selected as the service link, or the TCP link with the minimum delay is selected as the service link. With the development of 5G technology, the Internet of Things has become more and more popular, the fields involved have become more and more extensive, and the demand for remote control operation has also increased accordingly. The remote control operation has high requirements on delay performance of data transmission, and especially delay-sensitive applications, such as the Internet of Vehicles and remote real-time medical treatment, need low delay and high security. In these scenarios, to avoid accidents such as vehicle collisions and surgical misoperation, 5G networks are required to provide delay quality of service (QoS) guarantees as low as 1ms while ensuring high reliability. The traditional security protocols, such as authentication process and encryption and decryption process, however, are not designed with communication scenarios with ultra-high reliability and low delay. This may bring about that the delay caused by the traditional and complex security protocols/algorithms is unable to meet the requirement of ultra-low delay. However, in the embodiment, the data sending terminal may dynamically select the TCP link with the minimum round-trip time (RTT) to transmit data of the target service according to the RTT of each TCP link, which can effectively guarantee that data transmission delay is the minimum among all current network resources.

At S206, the terminal hands over the target service to a second TCP link in the TCP link group and continues to perform the target service.

When there is a TCP link handover demand, one of the terminal and the server, as the data sending terminal, may hand over the target service from the current service link, namely the first TCP link, to other TCP links, such as the second TCP link. It should be understood that the reason why there is a TCP link handover demand in the data sending terminal may lie in that the first TCP link fails and cannot continue to provide services, or may lie in that the data sending terminal considers that the transmission quality of the first TCP link does not meet the requirement. For example, although the first TCP link may continue to carry out service transmission, the data sending terminal founds that the RTT of the first TCP link exceeds the limit, and thus the data sending terminal may select one of the other TCP links in the TCP link group to continue to carry out the target service according to the RTT of each TCP link. In some other example, the data sending terminal always uses the TCP link with the minimum RTT in the TCP link group as the service link, and thus if the data sending terminal founds that the RTT of the first TCP link is no longer the minimum in the TCP link group, the data sending terminal will hand over the target service from the first TCP link to a current TCP link with the minimum RTT, such as the second TCP link.

According to the service transmission method provided in the embodiment, at least two mutually associated and backup TCP links are established between the terminal and the server. In this way, when the TCP link for transmitting the target service fails, the terminal and the server may seamlessly hand over the target service to other TCP links and continue to perform the target service without service interruption, and a user side will not detect the change in service transmission links, thereby improving the reliability of service transmission. On the other hand, the terminal and the server may select the link with the required performance from the mutually associated TCP links for transmission, e.g., the TCP link with the minimum RTT to implement the target service, which can reduce the service delay.

### A second embodiment

In order to make those skilled in the art more clear about the advantages and details of the foregoing service transmission method, the embodiment will continue to introduce this solution in combination with examples.

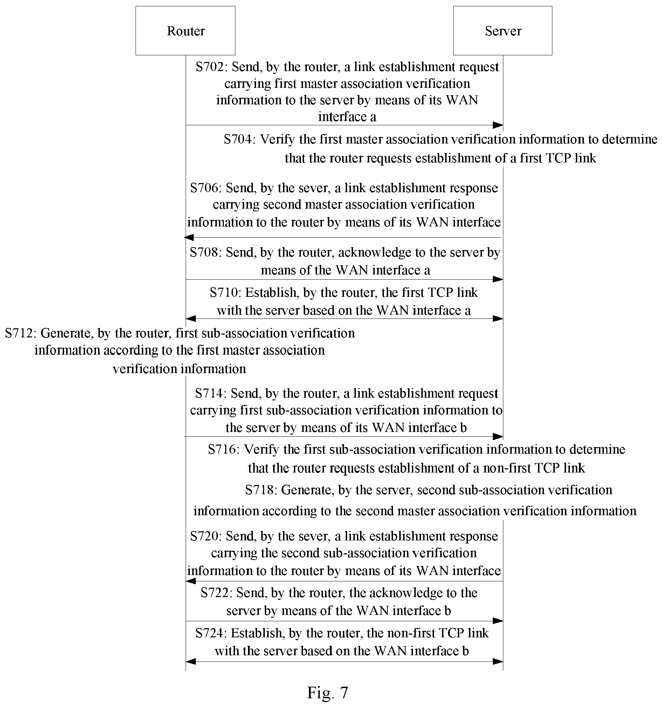

In the embodiment, it is assumed that a router is a terminal. In the following, please refer to the flow of establishing a TCP link group between the router and a server shown in Fig.7.

At S702, the router sends a link establishment request carrying first master association verification information to the server by means of its first WAN interface a.

In the embodiment, the router has a plurality of WAN interfaces (e.g., the WAN interface a, a WAN interface b and a WAN interface c) and a plurality of LAN interfaces. The LAN interfaces are used to connect to local area network devices in a local area network, such as computers and cameras. The router may configure a policy routing table for each WAN interface in advance. Recorded in each policy routing table is information, such as an interface number of a corresponding WAN interface, an IP address and a corresponding gateway.

After starting, the router may monitor the state of each of its WAN interfaces. When there is a need for the router to establish a TCP link with the server, the router may select a WAN interface that is normal and has not been occupied from the WAN interfaces, and then send the link establishment request to the server based on this WAN interface. For example, the router selects the WAN interface a to send the link establishment request, the link establishment request contains first master association verification information randomly generated by the router, and the first master association verification information is herein marked as key-L1. Optionally, the router sends key-L1 by using a send interface in a socket interface.

At S704, the server verifies the first master association verification information to determine that the router requests the establishment of a first TCP link.

Considering that the server may provide services to multiple routers and that the server may have already established TCP links with other routers, after the server receives a link establishment request, the server needs to extract the association verification information carried therein, i.e., key-L1, and determines whether the TCP link expected by the link establishment request is the first TCP link or a link that is mutually associated with a certain first TCP link according to key-L1.

At S706, the server sends a link establishment response carrying second master association verification information to the router by means of a first WAN interface of the server.

After verification, the server determines that the link establishment request where key-L1 is located expects to establish the first TCP link, and if the server also agrees to establish the first TCP link, the server may send the link establishment response carrying the second master association verification information to the router by means of the WAN interface of the server. The second master association verification information is herein marked as key-L1'.

At S708, the router sends acknowledge to the server by means of the WAN interface a.

After the router receives the link establishment response from the server, key-L1' may be obtained. In the embodiment, key-L1' can indicate to the router that the server agrees to establish the first TCP link requested by the router. In the embodiment, both key-L1 and key-L1' are 64-bit. Both key-L1 and key-L1' may be carried in the acknowledge by the router and sent to the server for confirmation.

At S710, the router establishes the first TCP link with the server based on the WAN interface a.

Subsequently, the router will establish the TCP link with the server, as the first one of TCP links established between the two, based on the WAN interface a, and the first TCP link is herein marked as L1.

At S712, the router generates first sub-association verification information according to the first master association verification information.

When there is a need for the router to establish a non-first TCP link with the server, the router may generate the first sub-association verification information key-L2 based on the first association verification information key-L1. The manner to generate the first sub-association verification information according to the first association verification information has been explained in more detail in the foregoing examples and will not be described herein in detail.

At S714, the router sends a link establishment request carrying the first sub-association verification information to the server by means of the WAN interface b of the router.

After generating key-L2, the key-L2 is carried in the link establishment request by the server and sent to the server by means of another available WAN interface of the router. In the embodiment, the WAN interface used to send the key-L2 at a router side is the WAN interface b.

At S716, the server verifies the first sub-association verification information to determine that the router requests the establishment of a non-first TCP link.

After receiving one link establishment request, the server extracts the association verification information from the link establishment request. Since the extracted association verification information is key-L2 which is mutually associated with key-L1, after verification, the server may determine that the router requests the establishment of the non-first TCP link associated with L1 this time.

At S718, the server generates second sub-association verification information according to the second master association verification information.

If the server also agrees to establish the non-first TCP link, the server may generate the second sub-association verification information, which is herein marked as key-L2', and the server may generate key-L2' according to key-L1' by means of the same generation rule as the router generates key-L2 according to key-L1, which is not described herein in detail.

At S720, the server sends a link establishment response carrying the second sub-association verification information to the router by means of the WAN interface of the server.

After generating key-L2', the server sends key-L2' to the router by means of the link establishment response.

At S722, the router sends the acknowledge to the server by means of the WAN interface b.

After the router receives the link establishment response carrying key-L2' by means of the WAN interface b, the router may determine that the server supports the establishment of the non-first TCP link according to key-L2'. Subsequently, the router sends both key-L2 and key-L2' to the server by means of the acknowledge for confirmation.

At S724, the router establishes the non-first TCP link with the server based on the WAN interface b.

Subsequently, the router will establish the TCP link with the server based on the WAN interface b, and the non-first TCP link is herein marked as L2.

There is no doubt that there may be more non-first TCP links established between the router and the server, such as non-first TCP links L3, L4 and L5. The establishing processes of these non-first TCP links are the same as the process of establishing the non-first TCP link L2, and will not be repeated herein. That is, the steps from S712 to S724 in the embodiment may be repeatable.

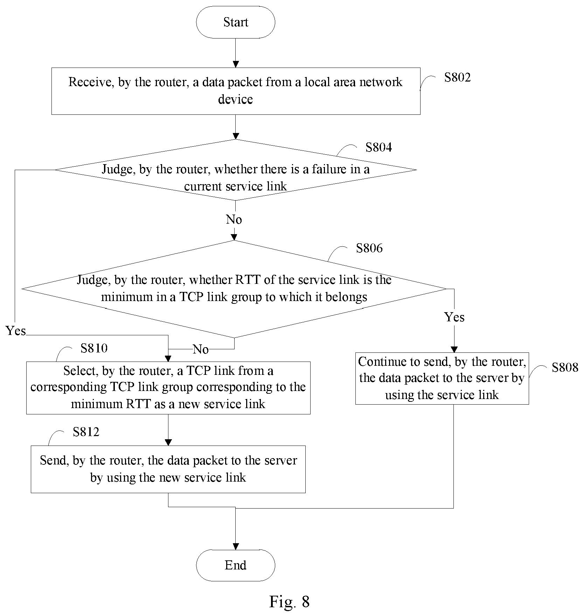

The process of carrying out service transmission based on a TCP link group is introduced below in conjunction with the flow chart shown in Fig. 8. It is assumed herein that a router is a data sending terminal.

At S802, the router receives a data packet from a local area network device.

In the embodiment, the router may receive the data packet from a local area network. It should be understood that the data packet is not limited to a TCP data packet, and the data packet may alternatively be a user datagram protocol (UDP) data packet, an Internet control message protocol (ICMP) data packet, etc.

At S804, the router judges whether there is a failure in a current service link.

If the judgment result is yes, the current service link may no longer continue to provide services, and thus the router performs S810, or otherwise the router performs S806.

At S806, the router judges whether RTT of the service link is the minimum in a TCP link group to which the RTT of the service link belongs.

If the judgment result is yes, the router performs S808, or otherwise the router performs S810. At S808, the router continues to send the data packet to the server by using the service link.

Since the current service link still has the minimum delay in the TCP link group to which the current service link belongs, the router continues to send the data packet to the server by using the service link.

At S810, the router selects a TCP link corresponding to the minimum RTT from a corresponding TCP link group as a new service link.

If the router determines that the RTT of the service link has not been the minimum in the TCP link group to which it belongs, it will reselect the service link, and specifically, the router will select the TCP link corresponding to the minimum RTT from the TCP link group as the new service link.

At S812, the router sends the data packet to the server by using the new service link.

After determining the new service link, the router sends the data packet to the server by using the new service link. Since multiple available TCP links are maintained between the server and the router at the same time, and the multiple TCP links are all used to guarantee a same service, the server may receive the data packet regardless of which TCP link the router uses to send the data packet.

In the service transmission solution provided in the embodiment, the multiple TCP links back up each other for work, and when one of the TCP links fails, the service may be seamlessly handed over to other TCP links and continued, without service interruption. Moreover, it should be understood that when the original faulty TCP link is restored to work normally, the original faulty TCP link may be added into the TCP link group again, and in this way, terminal-to-terminal applications are unaware of link handover, such that the reliability of transmission can be improved.

### A third embodiment

The embodiment provides a storage medium. The storage medium includes volatile or non-volatile, removable or non-removable mediums that may be implemented in any method or technology for storing information, such as a computer readable instruction, a data structure, a computer program module or other data. The storage medium includes, but is not limited to, a random access memory (RAM), a read-only memory (ROM), an electrically erasable programmable read only memory (EEPROM), a flash memory or other memory technologies, a compact disc read-only memory (CD-ROM), a digital video disk (DVD) or other optical disk storage, a magnetic cassette, a magnetic tape, a magnetic disk storage or other magnetic storage apparatus, or any other medium which may be used to store the desired information and which may be accessed by a computer.

The storage medium may store one or more computer programs that may be read, compiled and executed by one or more processors. In the embodiment, the storage medium may store at least one of a first service transmission program and a second service transmission program. The first service transmission program may be executed by the one or more processors to implement the flow of any one of the service transmission methods at the terminal side introduced in the foregoing embodiments. The second service transmission program may be executed by the one or more processors to implement the flow of any one of the service transmission methods at the server side introduced in the foregoing embodiments.

The embodiment also provides a computer program product including a computer readable apparatus. The computer readable apparatus stores the computer program as shown above. The computer readable apparatus in the embodiment may include a computer readable storage medium as shown above.

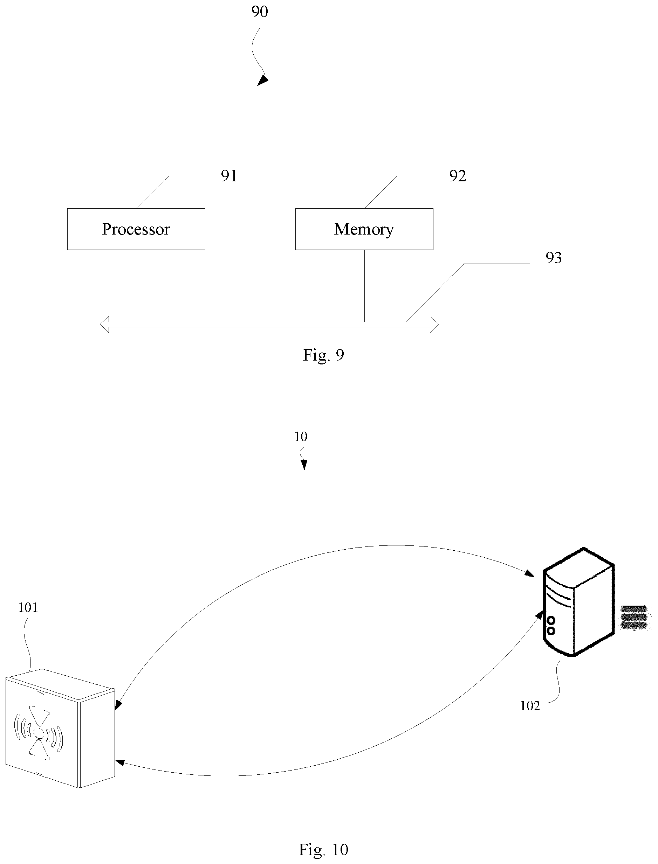

For example, the computer program product includes a communication device, as shown in Fig. 9. The communication device 90 includes a processor 91, a memory 92 and a communication bus 93 used to connect the processor 91 and the memory 92. The memory 92 may be the foregoing storage medium storing at least one of the first service transmission program and the second service transmission program. In some examples, the communication device 90 is a terminal, and the processor 91 in the communication device 90 may read, compile and execute the first service transmission program to implement the flow of the service transmission method at the terminal side introduced in the foregoing embodiments.

For example, the processor 91 establishes at least two mutually associated TCP links with the server to form a TCP link group, and then the processor 91 implements data transmission of a target service with the server by using a first TCP link in the TCP link group. Subsequently, the processor 91 hands over the target service to a second TCP link in the TCP link group and continues to perform the target service.

Optionally, when forming a TCP link group, the processor 91 firstly establishes a first TCP link in the TCP link group with a server, and, together with the server, determines master association verification information of the first TCP link, the first TCP link being the first one of the TCP links in the TCP link group. Then, the processor 91 establishes at least one non-first TCP link in the TCP link group with the server.

Optionally, when establishing the non-first TCP link, the processor 91 generates sub-association verification information of the non-first TCP link according to the master association verification information; then the processor 91 sends a link establishment request carrying the sub-association verification information to the server, the sub-association verification information being used to reflect that the TCP link to be established and the first TCP link are mutually associated; and then the processor 91 receives a link establishment response, which is sent from the server and represents yes, and establishes the non-first TCP link with the server.

In some examples, when establishing the non-first TCP link with the server, the processor 91 sends a link establishment request carrying the first master association verification information to the server by means of a first WAN interface, and then receives a link establishment response carrying second master association verification information from the server by means of the first WAN interface. The second master association verification information is used to represent that the server agrees to establish the first TCP link. Then, the processor 91 establishes a TCP link, as the first TCP link, with the server based on the first WAN interface.

In some examples, when the processor 91 generates the sub-association verification information of the non-first TCP link according to the master association verification information, the processor 91 may generate first sub-association verification information corresponding to the non-first TCP link according to the first master association verification information. When sending a link establishment request carrying the sub-association verification information to the server, the processor 91 sends a link establishment request carrying the first sub-association verification information to the server. When receiving the link establishment response that is sent from the server and represents yes, the processor 91 receives the TCP link establishment response, which is sent from the server and carries second sub-association verification information, by means of a second WAN interface, the second sub-association verification information being used to represent that the server supports establishment of the non-first TCP link that is mutually associated with the first TCP link. When establishing the non-first TCP link with the server, the processor 91 establishes a TCP link with the server, as the non-first TCP link, based on the second WAN interface.

In some examples, after determining that the first TCP link fails, the processor 91 may hand over the target service to a second TCP link in the TCP link group and continues to perform the target service.

In some other examples, the processor 91 may determine that the transmission quality of the first TCP link does not meet the requirement firstly, and then hand over the target service to the second TCP link in the TCP link group and continue to perform the target service.

Optionally, when it is determined that the transmission quality of the first TCP link does not meet the requirement, the processor 91 may determine the RTT of the first TCP link does not meet the requirement.

In some examples, the communication device 90 is a server, and thus the processor 91 in the communication device 90 may read, compile and execute the second service transmission program, to implement the flow of the service transmission method at the server side introduced in the foregoing embodiments.

The processor 91 establishes at least two mutually associated TCP links with the terminal to form a TCP link group, and then the processor 91 implements data transmission of a target service with the terminal by using a first TCP link in the TCP link group. In the subsequent process, the processor 91 may hand over the target service to a second TCP link in the TCP link group and continues to perform the target service.

When establishing the at least two mutually associated TCP links with the terminal, the processor 91 establishes a first TCP link in a TCP link group with the terminal, and, together with the terminal, determines master association verification information of the first TCP link, the first TCP link being the first one of the TCP links in the TCP link group; and then, the processor 91 establishes at least one non-first TCP link in the TCP link group with the terminal. When establishing the non-first TCP link, the processor 91 receives a link establishment request, which is sent from the terminal and carries sub-association verification information, and then verifies the sub-association verification information according to the master association verification information to determine that there is a mutually associated relationship between the TCP link to be established and the first TCP link; and then the processor 91 sends a link establishment response that represents yes to the terminal, and establishes the non-first TCP link with the terminal.

In some examples, after determining that the first TCP link fails, the processor 91 may hand over the target service to the second TCP link in the TCP link group and continues to perform the target service.

In some other examples, the processor 91 may determine that the transmission quality of the first TCP link does not meet the requirement firstly, and then hand over the target service to the second TCP link in the TCP link group and continues to perform the target service.

The embodiment of the present disclosure also provides a service transmission system. Please refer to Fig. 10, the service transmission system includes a terminal 101 and a server 102. The terminal 101 may be a communication device in which the foregoing processor 91 executes the first service transmission program, and the server 102 may be a communication device in which the foregoing processor 91 executes the second service transmission program. It should be understood that the terminal 101 may be a router, which may be connected to one or more local area network devices in a local area network, such as mobile phones, computers, portable android devices (PADs) or smart home devices.

In the embodiment, based on function division, the router may include an NAT module, a routing function module, a TCP tunnel function module and a kernel TCP protocol stack.

The NAT module is configured to convert a private network IP (e.g., 192.168.X.X) address in a local area network into a public network IP address, and based on the function of the NAT module, the router may be connected to a plurality of local area network devices by means of WiFi, network cables and USB cables, thereby enabling the plurality of local area network devices to implement services.

The routing function module is mainly responsible for configuring policy routing rules for the kernel TCP protocol stack and for routing data, which is from the LAN into the router, to TCP tunnels.

The TCP tunnel function module requests to establish a TCP link with the server by using a standard socket interface, and after the link establishment request passes through the kernel TCP protocol stack, the kernel TCP protocol stack may send it to the server by using different WAN interfaces, thereby achieving the purpose of establishing multiple TCP tunnels. In the subsequent communication process, data packets of all protocols (e.g., a TCP protocol, a UDP protocol and an ICMP protocol) sent by a local area network device at an LAN side of the router may be sent into the TCP tunnels, such that the TCP protocol stack selects a TCP link and then sends the data packets to the server.

The kernel TCP protocol stack searches for available WAN interfaces according to configured policy routing, and establishes one TCP link on each available WAN interface. All the TCP links back up each other, the upper-level applications send data packets by using traditional send interfaces, and when the data packets pass the kernel TCP protocol stack, the kernel TCP protocol stack sends the data packets after selecting the optimal TCP link according to the RTT of each TCP link.

As mentioned above, according to the technical solutions of the present disclosure, a terminal establishes at least two mutually associated TCP links with a server to form a TCP link group. Then, during a process of implementing data transmission of a target service with the server by using a first TCP link in the TCP link group, the terminal and the server may also directly hand over the target service to a second TCP link in the TCP link group and continue to perform the target service. The first TCP link and the second TCP link belong to a same TCP link group and are associated with each other to guarantee the implementation of the same service. Moreover, the second TCP link is established before handover, and thus when there is a handover demand, the terminal and the server may seamlessly hand over the target service to the second TCP link, thereby ensuring the continuity of the target service and enhancing the reliability of the communication connection between the terminal and the server.

Those skilled in the art should understand that, all or some steps of the methods disclosed above and functional modules/units of a system or an apparatus may be implemented as software (which may be implemented by using computer program codes executable by the computer apparatus), firmware, hardware, and a proper combination thereof. In an implementation of the hardware, a division of the functional modules/units mentioned above does not necessarily correspond to a division of physical components. For example, one physical component may have multiple functions, or one function or step may be implemented by multiple physical components cooperatively. Some or all physical components may be implemented as software executed by a processor, such as a central processor, a digital signal processor or a microprocessor, or may be implemented as hardware, or may be implemented as an integrated circuit, such as an application-specific integrated circuit.

In addition, as is known to a person of ordinary skill in the art, the communications medium usually includes the computer readable instruction, the data structure, the program module or other data in a modulated data signal, such as a carrier or other transmission mechanisms, and can include any information delivery medium. In this way, the present disclosure is not limited to any particular combination of hardware and software.

The above is a further detailed description of the embodiments of the present disclosure in conjunction with specific implementations, and it cannot be assumed that the specific implementation of the present disclosure is only limited to these descriptions. For a person of ordinary skill in the art to which the present disclosure belongs, a number of simple derivations or substitutions can be made without departing from the conception of the present disclosure, all of which should be considered as falling within the scope of protection of the present disclosure.

## Claims

1. A service transmission method, comprising:
establishing at least two mutually associated TCP links with a server to form a TCP link group;
implementing data transmission of a target service with the server by using a first TCP link in the TCP link group; and
handing over the target service to a second TCP link in the TCP link group and continuing to perform the target service.

2. The service transmission method according to claim 1, wherein the step to form a TCP link group comprises:
establishing a first TCP link in the TCP link group with the server, and determining, together with the server, master association verification information of the first TCP link, the first TCP link being a first one of the TCP links in the TCP link group; and
establishing at least one non-first TCP link in the TCP link group with the server, establishing the non-first TCP link comprising:
generating sub-association verification information of the non-first TCP link according to the master association verification information;
sending a link establishment request carrying the sub-association verification information to the server, the sub-association verification information being used to represent that a TCP link to be established is mutually associated with the non-first TCP link;
receiving a link establishment response that is sent from the server and represents yes; and
establishing the non-first TCP link with the server.

3. The service transmission method according to claim 3, wherein the establishing a first TCP link in the TCP link group with the server comprises:
sending a link establishment request carrying first master association verification information to the server by means of a first wide area network WAN interface;
receiving a link establishment response that is sent from the server and carries second master association verification information by means of the first WAN interface, the second master association verification information being used to represent that the server agrees to establish the first TCP link; and
establishing a TCP link with the server as the first TCP link based on the first WAN interface.

4. The service transmission method according to claim 3, wherein the generating sub-association verification information of the non-first TCP link according to the master association verification information comprises:
generating first sub-association verification information corresponding to the non-first TCP link according to the first master association verification information;
the sending a link establishment request carrying the sub-association verification information to the server comprises:
sending a link establishment request carrying the first sub-association verification information to the server by means of a second WAN interface;
the receiving a link establishment response that is sent from the server and represents yes comprises:
receiving a link establishment response that is sent from the server and carries second sub-association verification information by means of the second WAN interface, the second sub-association verification information being used to represent that the server supports establishment of a non-first TCP link that is mutually associated with the first TCP link; and
the establishing the non-first TCP link with the server comprises:
establishing a TCP link with the server as the non-first TCP link based on the second WAN interface.

5. The service transmission method according to any one of claims 1 to 4, wherein before the handing over the target service to a second TCP link in the TCP link group and continuing to perform the target service, the method further comprises:
determining that the first TCP link fails; or
determining that transmission quality of the first TCP link does not meet a requirement.

6. A service transmission method, comprising:
establishing at least two mutually associated TCP links with a terminal to form a TCP link group;
implementing data transmission of a target service with the terminal by using a first TCP link in the TCP link group; and
handing over the target service to a second TCP link in the TCP link group and continuing to perform the target service.

7. The service transmission method according to claim 6, wherein the establishing at least two mutually associated TCP links with a terminal comprises:
establishing a first TCP link in the TCP link group with the terminal, and determining, together with the terminal, master association verification information of the first TCP link, the first TCP link being a first one of the TCP links in the TCP link group; and
establishing at least one non-first TCP link in the TCP link group with the terminal, establishing the non-first TCP link comprising:
receiving a link establishment request that is sent from the terminal and carries sub-association verification information;
verifying the sub-association verification information according to the master association verification information to determine that there is a mutually associated relationship between a TCP link to be established and the first TCP link;
sending a link establishment response that represents yes to the terminal; and
establishing a non-first TCP link with the terminal.

8. The service transmission method according to claim 6 or 7, wherein before the handing over the target service to a second TCP link in the TCP link group and continuing to perform the target service, the method further comprises:
determining that the first TCP link fails; or
determining that transmission quality of the first TCP link does not meet a requirement.

9. A communication device, comprising: a processor, a memory and a communication bus, wherein
the communication bus is configured to implement connection communication between the processor and the memory; and
the processor is configured to execute a first service transmission program stored in the memory to implement steps of the service transmission method according to any one of claims 1 to 5; or the processor is configured to execute a second service transmission program stored in the memory to implement steps of the service transmission method according to any one of claims 6 to 8.

10. A storage medium, wherein the storage medium stores at least one of first service transmission program and second service transmission program, the first service transmission program is executable by one or more processors to implement steps of the service transmission method according to any one of claims 1 to 5; and the second service transmission program is executable by one or more processors to implement steps of the service transmission method according to any one of claims 6 to 8.
